# FASCICULE DE BREVET EUROPEEN

(11) **EP 2 961 018 B1**
(45) Date de publication et mention de la délivrance du brevet: **22.09.2021**
(21) Numéro de dépôt: 15172534.8
(22) Date de dépôt: 17.06.2015
(51) Int. Cl.: H02H 3/00

(54) **ORGANE DE CALIBRAGE D'UNE UNITÉ ÉLECTRONIQUE DE DÉCLENCHEMENT D'UN DISJONCTEUR, ENSEMBLE DE TELS ORGANES DE CALIBRAGE, DISJONCTEUR, ET PROCÉDÉ DE CALIBRAGE ASSOCIÉS**
EICHORGAN EINER ELEKTRONISCHEN EINHEIT ZUM AUSLÖSEN EINES SCHUTZSCHALTERS, GESAMTHEIT DIESER EICHORGANE, ENTSPRECHENDER SCHUTZSCHALTER UND ENTSPRECHENDES EICHVERFAHREN
CALIBRATION MEANS OF AN ELECTRONIC UNIT FOR TRIGGERING A CIRCUIT BREAKER, SET OF SUCH CALIBRATION MEANS, CIRCUIT BREAKER, AND CALIBRATION METHOD THEREOF

(30) Priorité: 24.06.2014 FR 1455842
(43) Date de publication de la demande: 30.12.2015
(73) Titulaire: Schneider Electric Industries SAS, 92500 Rueil-Malmaison (FR)
(72) Inventeur: BLANCHARD, Pierre, 38050 Grenoble Cedex 09 (FR); BERNARD, Jean-Baptiste, 38050 Grenoble Cedex 09 (FR); SORIN, Joel, 38050 Grenoble Cedex 09 (FR); EDWARDS, Benjamin, 38050 Grenoble Cedex 09 (FR)
(74) Mandataire: Lavoix

(56) Documents cités:
- EP-A2- 0 807 874
- US-A- 4 788 620
- US-A- 5 506 485
- None

## Description

La présente invention concerne un organe de calibrage d'une unité électronique de déclenchement d'un disjoncteur, un ensemble de tels organes de calibrage, un disjoncteur comprenant un tel organe de calibrage, et un procédé de calibrage de l'unité de déclenchement d'un tel disjoncteur.

L'unité de déclenchement comprend un organe de déclenchement de l'ouverture de contacts du disjoncteur et des moyens de pilotage de l'organe de déclenchement.

L'invention s'applique plus spécifiquement aux disjoncteurs électroniques qui sont propres à être utilisés avec différents types d'unités électroniques de déclenchement. Ces unités de déclenchement sont généralement amovibles, et sont montées dans le disjoncteur par exemple lors de l'installation du disjoncteur sur une installation électrique. Dans de tels disjoncteurs, l'unité de déclenchement mesure le courant circulant à travers le disjoncteur dans lequel elle est installée. Elle commande l'ouverture des contacts du disjoncteur en fonction du courant mesuré, des valeurs de calibre propres à un châssis du disjoncteur et au fonctionnement mécanique du disjoncteur et d'autres réglages. De telles valeurs de calibre sont généralement inconnues de l'unité de déclenchement lors de son installation dans le disjoncteur, car l'objectif est d'avoir des unités de déclenchement interchangeables et non spécifiques à un certain type de disjoncteur électronique.

Afin de régler les valeurs de calibre et de les transmettre à l'unité de déclenchement, il est ainsi connu, par exemple de US 4 788 620 A d'installer dans de tels disjoncteurs des organes de calibrage adaptés pour mémoriser les valeurs de calibre et les transmettre à l'unité de déclenchement lors de la mise sous tension du disjoncteur, c'est-à-dire lorsque ses contacts sont fermés et qu'il est installé sur l'installation électrique ou plus généralement alimenté par une source d'alimentation quelconque. Les organes de calibrage sont généralement montés en usine sur le disjoncteur et ne sont pas réglables par un utilisateur. En effet, ils dépendent du châssis du disjoncteur et des performances mécaniques du disjoncteur.

Par ailleurs, il est également connu de US 5 506 485 A, une liaison de communication mettant en œuvre des registres à décalage. Toutefois une telle liaison de communication ne permet pas le calibrage d'une unité électronique de déclenchement.

Il est connu, en outre, d'utiliser des organes de calibrage qui comprennent des circuits analogiques permettant de fixer les valeurs de calibre sous la forme de grandeurs électriques, telles que des tensions. Les grandeurs électriques sont ensuite exploitées par un convertisseur analogique-numérique, puis écrites dans une mémoire de l'unité de déclenchement.

Cependant, l'utilisation d'une mémoire rend assez long le temps d'accès aux valeurs de calibre. De plus, les circuits analogiques sont sensibles aux perturbations électromagnétiques, et une telle solution est donc complexe et peu fiable particulièrement en environnement perturbé.

Il est également connu du document EP 0 807 874 A2 d'utiliser, dans un disjoncteur, un premier commutateur permettant de fixer des valeurs de calibre et un deuxième commutateur fournissant des données permettant d'adresser les valeurs de calibre dans une mémoire de type EEPROM. Il est ainsi nécessaire pour le déclencheur, afin de connaître les valeurs de calibre, d'écrire les valeurs de calibre dans la mémoire, puis de venir lire la mémoire. Or, la mémoire est un composant coûteux et nécessite un temps important pour mémoriser les données, typiquement de l'ordre de 5ms à 10ms. Le temps de mémorisation des valeurs de calibre est donc important dans un tel disjoncteur. L'utilisation d'un tel disjoncteur présente alors un risque, notamment lorsque les contacts du disjoncteur sont fermés alors qu'un courant de court-circuit traverse des conducteurs auxquels le disjoncteur est connecté.

Le but de l'invention est donc de proposer un organe de calibrage fiable et rapide permettant de fournir au disjoncteur, et plus spécifiquement à son unité de déclenchement, les valeurs de calibre avec une fiabilité et une vitesse améliorées.

A cet effet, l'invention a pour objet un disjoncteur selon la revendication 1.

Grâce à l'invention, le temps de récupération de chaque identifiant prédéterminé par l'unité de déclenchement est amélioré, et le temps nécessaire pour l'ouverture des contacts du disjoncteur lorsque les contacts sont fermés sur un court-circuit est alors réduit. En effet, chaque registre à décalage permet une transmission fiable et rapide de chaque identifiant prédéterminé à l'unité de déclenchement, qui est apte à commander l'ouverture des contacts du disjoncteur en fonction de chaque identifiant prédéterminé, et ce dès réception desdits identifiants.

Selon différents aspects de l'invention, le disjoncteur est selon l'une des revendications 2 à 7 ou 9.

L'invention a également pour objet un ensemble selon la revendication 8.

L'invention concerne, en outre, un procédé de calibrage selon la revendication 10.

Avantageusement, le procédé de calibrage est selon la revendication 11.

L'invention sera mieux comprise et d'autres avantages de celle-ci apparaitront à la lumière de la description qui va suivre, donnée uniquement à titre d'exemple non limitatif, et faite en se référant aux dessins annexés, sur lesquels :
- la figure 1 est une représentation schématique d'un ensemble comprenant un premier disjoncteur conforme à un premier mode de réalisation de l'invention et un deuxième disjoncteur conforme à un deuxième mode de réalisation de l'invention ;
- la figure 2 est une représentation schématique d'une unité de déclenchement et d'un organe de calibrage du premier disjoncteur de la figure 1 ;
- la figure 3 est un chronogramme représentant deux signaux de commande d'un organe de calibrage du premier disjoncteur de la figure 1, un signal interne d'une unité de déclenchement dudit premier disjoncteur, et un signal de sortie transmis par l'organe de calibrage à l'unité de déclenchement ;
- la figure 4 est une représentation schématique d'une unité de déclenchement, d'un organe de calibrage et d'organes de mémorisation du deuxième disjoncteur de la figure 1 ; et
- la figure 5 est un organigramme d'un procédé de calibrage des unités de déclenchement des premier et deuxième disjoncteurs de la figure 1.

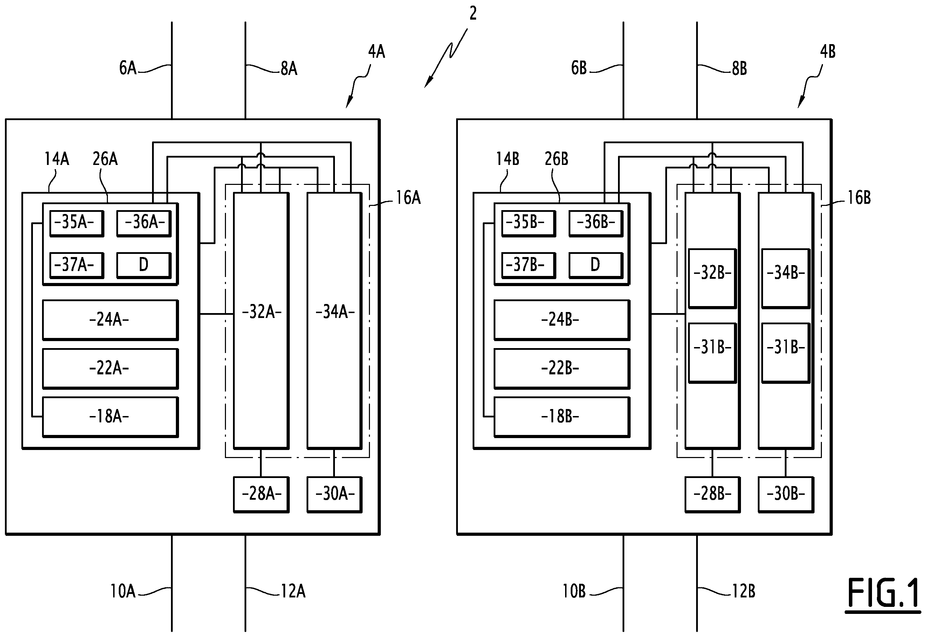

L'ensemble 2 présenté à la figure 1 comprend un premier disjoncteur 4A et un deuxième disjoncteur 4B. Dans la suite de la description, les différents éléments compris dans le premier disjoncteur 4A ont leur référence qui finit par la lettre A, tandis que les différents éléments compris dans le deuxième disjoncteur 4B ont leur référence qui finit par la lettre B.

Le premier disjoncteur 4A correspond à un premier mode de réalisation de l'invention, et le deuxième disjoncteur 4B correspond à un deuxième mode de réalisation de l'invention.

Dans la suite de la description, le premier disjoncteur 4A et le deuxième disjoncteur 4B seront présentés successivement à l'aide des figures 1 à 3 et 5, et respectivement des figures 1, 4 et 5.

Le premier disjoncteur 4A est connecté entre, d'une part, un premier 6A et un deuxième 8A conducteurs électriques d'entrée et, d'autre part, un premier 10A et un deuxième 12A conducteurs électriques de sortie.

Le premier disjoncteur 4A comprend des contacts, non représentés, mobiles entre une position ouverte et une position fermée.

Le premier disjoncteur 4A est apte, lorsque les contacts mobiles sont en position fermée, à relier électriquement le premier conducteur électrique d'entrée 6A avec le premier conducteur électrique de sortie 10A, et le deuxième conducteur électrique d'entrée 8A avec le deuxième conducteur électrique de sortie 12A.

Le premier disjoncteur 4A est apte, lorsque les contacts mobiles sont en position ouverte, à isoler électriquement le premier conducteur électrique d'entrée 6A du premier conducteur électrique de sortie 10A, et le deuxième conducteur électrique d'entrée 8A du deuxième conducteur électrique de sortie 12A.

Le premier disjoncteur 4A comprend une unité de déclenchement électronique 14A et un organe 16A de calibrage de l'unité de déclenchement électronique 14A.

Le premier conducteur électrique d'entrée 6A et le premier conducteur électrique de sortie 10A sont, par exemple, des conducteurs électriques de phase ou encore de potentiel continu positif.

Le deuxième conducteur électrique d'entrée 8A et le deuxième conducteur électrique de sortie 12A sont, par exemple, des conducteur de neutre ou encore des conducteur de potentiel continu de référence.

L'unité de déclenchement 14A comprend un organe 18A de mesure d'un courant traversant le premier disjoncteur 4A, un organe 22A de déclenchement de l'ouverture des contacts mobiles du premier disjoncteur 4A, un processeur 24A et une mémoire 26A associée au processeur 24A.

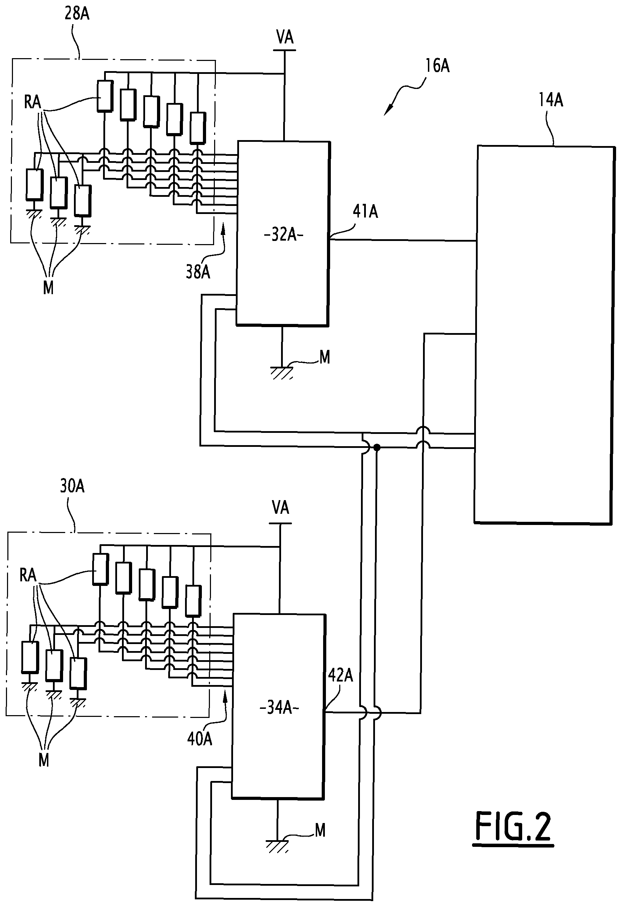

L'organe de calibrage 16A, illustré de manière plus détaillée à la figure 2, comprend un premier 28A et respectivement un deuxième 30A organes de mémorisation de premier, respectivement deuxième identifiants prédéterminés. L'organe de calibrage 16A comprend également un premier 32A et respectivement un deuxième 34A organes de lecture des premier, respectivement deuxième identifiants prédéterminés. Les premier et respectivement deuxième organes de lecture 32A, 34A sont associés au premier 28A et respectivement au deuxième 30A organes de mémorisation.

Le premier organe de calibrage 16A est, par exemple, installé dans le premier disjoncteur 4A lors de la fabrication en usine du premier disjoncteur 4A.

L'organe de déclenchement 22A est propre à commander l'ouverture des contacts du premier disjoncteur 4A. L'organe de déclenchement 22A comprend, par exemple, une bobine, non représentée, adaptée pour commander l'ouverture des contacts du premier disjoncteur 4A en fonction du courant la traversant.

Le processeur 24A est adapté pour exécuter des logiciels mémorisés dans la mémoire 26A.

La mémoire 26A est propre à mémoriser un logiciel 35A de pilotage de l'organe de déclenchement 22A et un logiciel 36A de contrôle de l'organe de calibrage 16A.

Le logiciel de contrôle 36A est propre, lorsqu'il est exécuté par le processeur 24A, à générer une commande de lecture des premier et deuxième identifiants prédéterminés et à transmettre à chaque organe de lecture 32A, 34A la commande de lecture générée.

La mémoire 26A est également propre à mémoriser un logiciel 37A de détermination de données de calibrage en fonction du premier et du deuxième identifiant prédéterminés. Les données de calibrage définissent au moins une condition de commande de l'ouverture des contacts du disjoncteur 4A par l'organe de déclenchement 22A. Les données de calibrage correspondent, par exemple, à un courant nominal du premier disjoncteur 4A déterminé en fonction du premier identifiant, et à un pouvoir de coupure du premier disjoncteur 4A déterminé en fonction du deuxième identifiant.

Le courant nominal est le courant que le disjoncteur 4A est capable de supporter dans des conditions spécifiées d'essais en service continu tout en respectant des limites d'échauffement.

Le pouvoir de coupure correspond à une intensité maximale d'un courant que le premier disjoncteur 4A est apte à interrompre sans se détériorer.

La mémoire 26A est, en outre, apte à mémoriser une donnée prédéterminée D correspondant à une configuration du premier disjoncteur 4A. La donnée D est, par exemple, propre à prendre une première ou une deuxième valeur prédéterminée correspondant chacune à une configuration respective du premier disjoncteur 4A. La première valeur correspond à une configuration numérique, correspondant au fait que chaque identifiant prédéterminé est mémorisé par les organes de mémorisation 28A, 30A sous un format numérique. La deuxième valeur prédéterminée correspond à une configuration analogique, correspondant au fait que chaque identifiant prédéterminé est mémorisé par des organes de mémorisation 28B, 30B sous un format analogique.

Le premier organe de mémorisation 28A est adapté pour mémoriser le premier identifiant prédéterminé, en fonction duquel l'unité de déclenchement 14A est propre à commander l'ouverture des contacts du disjoncteur 4A. Le premier organe de mémorisation 28A est électriquement connecté à des entrées 38A du premier organe de lecture 32A.

Le deuxième organe de mémorisation 30A est adapté pour mémoriser le deuxième identifiant prédéterminé, en fonction duquel l'unité de déclenchement 14A est propre à commander l'ouverture des contacts du disjoncteur 4A. Le deuxième 30A organe de mémorisation est électriquement connecté à des entrées 40A du deuxième organe de lecture 34A.

Les premier 28A et deuxième 30A organes de mémorisation comprennent des résistances RA connectées chacune d'une part, soit à une masse électronique M, soit à un potentiel prédéterminé VA différent de la masse et, d'autre part, à l'une des entrées 38A, 40A des premier 32A, respectivement deuxième 34A, organes de lecture. Chaque résistance RA est connectée à une entrée différente du premier 32A ou deuxième 34A organe de lecture.

Pour coder un « 1 » logique et transmettre le « 1 » logique sur l'une des entrées 38A, 40A du premier 32A ou deuxième 34A organe de lecture, la résistance RA connectée à ladite entrée, est reliée, par exemple par un opérateur, au potentiel prédéterminé VA.

Pour coder un « 0 » logique et transmettre le « 0 » logique sur l'une des entrées 38A, 40A du premier 32A ou deuxième 34A organe de lecture, la résistance RA connectée à ladite entrée, est reliée à la masse M.

Dans l'exemple de la figure 2, chaque organe de mémorisation 28A, 30A comprend huit résistances RA dont trois sont connectées à la masse M et cinq au potentiel prédéterminé VA, pour coder et mémoriser le premier et le deuxième identifiant prédéterminés, chacun sur 8 bits.

Chaque identifiant prédéterminé mémorisé comprend, en entrée de l'organe de lecture 32A, 34A correspondant, au moins un bit de donnée et au moins un bit de vérification, et plus spécifiquement dans l'exemple de la figure 2, cinq bits de donnée et trois bits de vérification, tels que des bits de contrôle de redondance cyclique. Avantageusement, chaque identifiant prédéterminé comprend un premier nombre de bits de vérification supérieur ou égal à 2, de préférence égal à 3.

Les premier 32A et deuxième 34A organes de lecture comportent des registres à décalage. Ces organes de lecture 32A, 34A sont de préférence des registres à décalage, tels que des registres à décalage parallèle-série, comprenant chacun huit entrées 38A, 40A en parallèle et une unique sortie 41A, 42A connectée en série à l'unité de déclenchement 14A.

Les organes de lecture 32A, 34A sont adaptés pour, en réponse à la transmission de la commande de lecture, lire le premier et le deuxième identifiants prédéterminés et les envoyer à l'unité de déclenchement 14A. La commande de lecture correspond à une commande de lecture des premier et deuxième identifiants.

Chaque registre à décalage comprend un ensemble de bascules synchrones, non représentées, également appelées circuits logiques, commandées via la commande de lecture. Une sortie de chaque bascule est par exemple connectée à l'entrée de la bascule suivante. Ainsi, une donnée introduite dans une première bascule se propage suivant un signal d'horloge, fonction de la commande de lecture, dans une ou des bascules suivantes.

Le premier organe de lecture 32A est adapté pour mémoriser le premier identifiant de manière temporaire seulement lorsqu'il est alimenté électriquement.

De même, le deuxième organe de lecture 34A est adapté pour mémoriser le deuxième identifiant de manière temporaire seulement lorsqu'il est alimenté électriquement.

Les organes de lecture 32A, 34A sont propres à recevoir simultanément la commande de lecture. Les organes de lecture 32A, 34A sont adaptés pour, en réponse à la transmission de la commande de lecture, lire le premier identifiant prédéterminé, respectivement le deuxième identifiant prédéterminé et envoyer à l'unité de déclenchement 14A les premier, respectivement deuxième identifiants prédéterminés lus.

Les organes de lecture 32A, 34A, et par conséquent l'organe de calibrage 16A, sont adaptés pour, en réponse à la transmission de la commande de lecture de chaque identifiant prédéterminé, lire chaque identifiant prédéterminé mémorisé dans chaque organe de mémorisation 28A, 30A et envoyer à l'unité de déclenchement 14A, via les sorties 41A, 42A, chaque identifiant prédéterminé lu, dans un délai inférieur à 300µs, de préférence inférieur à 200µs. Le logiciel de pilotage 35A de l'organe de déclenchement est adapté pour, lorsqu'il est exécuté par le processeur 24A, commander l'ouverture des contacts du disjoncteur, en fonction de la ou des données de calibrage et de la valeur de courant mesurée par l'organe de mesure 18A. Le logiciel de pilotage 35A est, par exemple, propre à définir le courant traversant une bobine de l'organe de déclenchement 22A pour commander l'ouverture des contacts du disjoncteur 4A lorsque la valeur du courant mesurée est supérieure à l'une des données de calibrage.

Le logiciel de contrôle 36A de l'organe de calibrage 16A est adapté pour, lorsqu'il est exécuté par le processeur 24A, générer la commande de lecture, puis transmettre la commande de lecture générée à chaque organe de lecture 32A, 34A. La commande de lecture est de préférence une commande prédéterminée mémorisée dans la mémoire 26A.

Le logiciel de contrôle 36A est propre à être exécuté par le processeur 24A, et à générer la commande de lecture, puis transmettre la commande de lecture générée, uniquement lorsque le courant mesuré par l'organe de mesure du courant 18A est supérieur à une valeur seuil de courant prédéterminée. Le logiciel de contrôle 36A est, par exemple, apte à générer la commande de lecture suite à l'attente d'un délai prédéterminé, de l'ordre de 10µs, après que l'organe de mesure 18A a mesuré un courant d'une intensité supérieure à la valeur seuil de courant ou plus généralement après que l'unité de déclenchement électronique 14A a été alimentée par une source d'alimentation quelconque permettant son fonctionnement. La valeur seuil de courant correspond à une valeur de courant minimale permettant l'alimentation et le fonctionnement de l'unité de déclenchement 14A et de l'organe de calibrage 16A. La valeur de seuil de courant est par exemple égale à 10 % d'une valeur d'un courant minimal déclenchant l'ouverture des contacts du premier disjoncteur 4A.

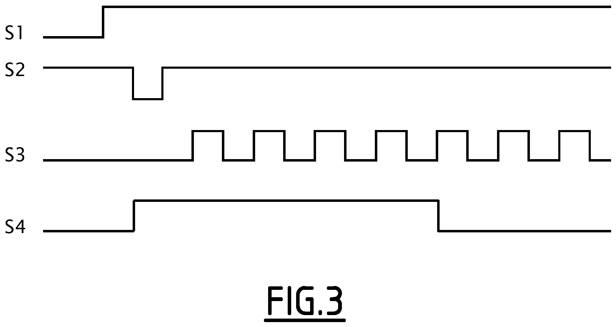

Par exemple, comme représenté à la figure 3, un premier signal S1 interne à l'unité de déclenchement 14A passe d'un état logique bas à un état logique haut, lorsque la valeur de l'intensité du courant mesurée est supérieure à la valeur seuil de courant ou plus généralement lorsque l'unité de déclenchement 14A est correctement alimentée afin de fonctionner. Ceci permet d'indiquer à l'unité de déclenchement, et notamment au processeur 26A, que l'alimentation de l'unité de déclenchement 14A est suffisante pour la génération de la commande de lecture.

Avantageusement, le logiciel de contrôle 36A est adapté pour lire la donnée prédéterminée D, et modifier la commande de lecture si la donnée prédéterminée ne correspond pas à la configuration numérique, c'est-à-dire à la première valeur prédéterminée. Cependant, dans le cas du premier disjoncteur 4A, la donnée D correspond à la configuration numérique et la commande de lecture reste inchangée.

Le logiciel de contrôle 36A est également adapté pour vérifier, en fonction du ou des bits de vérification, la validité du ou des bits de donnée lus et envoyés par chaque organe de lecture 32A, 34A à l'unité de déclenchement 14A.

Le logiciel de contrôle 36A est propre à générer la commande de lecture qui, comme représenté à la figure 3, comprend un deuxième signal S2 et un troisième signal S3.

Le deuxième signal S2 est apte à provoquer le chargement, dans les premier 32A, respectivement deuxième 34A, organes de lecture, des premier, respectivement deuxième, identifiants prédéterminés, et de leurs huit bits présents sur les entrées 38A, 40A, lorsqu'ils passent d'un état logique haut à un état logique bas pendant une période donnée, de l'ordre par exemple de 10µs. Comme présenté à la figure 3, le logiciel de contrôle 36A est apte à générer le deuxième signal S2 et à faire passer le deuxième signal S2 de l'état logique haut à l'état logique bas, lorsque le premier signal interne S1 passe, par exemple, d'un état logique bas à un état logique haut. Lors du passage du deuxième signal S2 à l'état logique bas, chaque organe de lecture est propre à envoyer à l'unité de déclenchement, via la sortie correspondante 41A, 42A, un bit de poids fort des premier, respectivement deuxième, identifiants prédéterminés.

Puis, suite au passage du signal S2 à l'état logique bas pendant la période donnée, le logiciel de contrôle 36A est propre à générer le troisième signal S3 avec une succession de 7 cycles de durée, par exemple, égale. Les sept cycles sont assimilables à un signal d'horloge et ont une période par exemple égale à 20µs. Les sept cycles permettent au premier, respectivement deuxième, organes de lecture 32A, 34A de transmettre successivement, sur leur sortie correspondante 41A, 42A, les 7 bits des premier et deuxième identifiants prédéterminés qui suivent le bit de poids fort. Le troisième signal S3 est propre à cadencer la transmission de chaque bit des identifiants prédéterminés sur les sorties 41A, 42A de chaque organe de lecture 32A, 34A. Ainsi, lorsque les sept cycles sont écoulés, tous les bits de chaque identifiant prédéterminé ont été transmis à l'unité de déclenchement 14A.

Chaque sortie série 41A, 42A est ainsi apte à transmettre successivement les 8 bits de l'identifiant prédéterminé lu à l'unité de déclenchement 14A.

Le logiciel de détermination 37A est propre, lorsqu'il est exécuté par le processeur 24A, à associer à chaque identifiant prédéterminé la donnée de calibrage correspondante.

A la figure 3, un quatrième signal S4 représente l'état de la sortie 41A du premier organe de lecture 32A lors de la transmission de la commande de lecture au premier organe de lecture 32A. On observe que chaque bit du premier identifiant prédéterminé est successivement transmis à l'unité de déclenchement 14A.

Dans le deuxième mode de réalisation de l'invention, les éléments similaires au premier mode de réalisation portent les mêmes références que dans le premier mode de réalisation avec la lettre B qui remplace la lettre A.

Les éléments similaires ne seront pas décrits à nouveau puisqu'ils ont déjà été présentés ci-dessus lors de la description du premier disjoncteur 14A.

Ainsi, le deuxième disjoncteur 4B est connecté entre, d'une part, un premier 6B et un deuxième 8B conducteurs électriques d'entrée et, d'autre part, un premier 10B et un deuxième 12B conducteurs électriques de sortie.

Le deuxième disjoncteur 4B comprend des contacts, non représentés, mobiles entre une position ouverte et une position fermée.

Le deuxième disjoncteur 4B comprend une unité de déclenchement électronique 14B, un organe 16B de calibrage de l'unité de déclenchement électronique 14B et un premier 28B, et respectivement un deuxième 30B, organes de mémorisation d'un premier, respectivement d'un deuxième, identifiants prédéterminés.

L'unité de déclenchement 14B comprend un organe 18B de mesure du courant traversant le deuxième disjoncteur 4B, un organe 22B de déclenchement de l'ouverture des contacts, un processeur 24B et une mémoire 26B associée au processeur 24B.

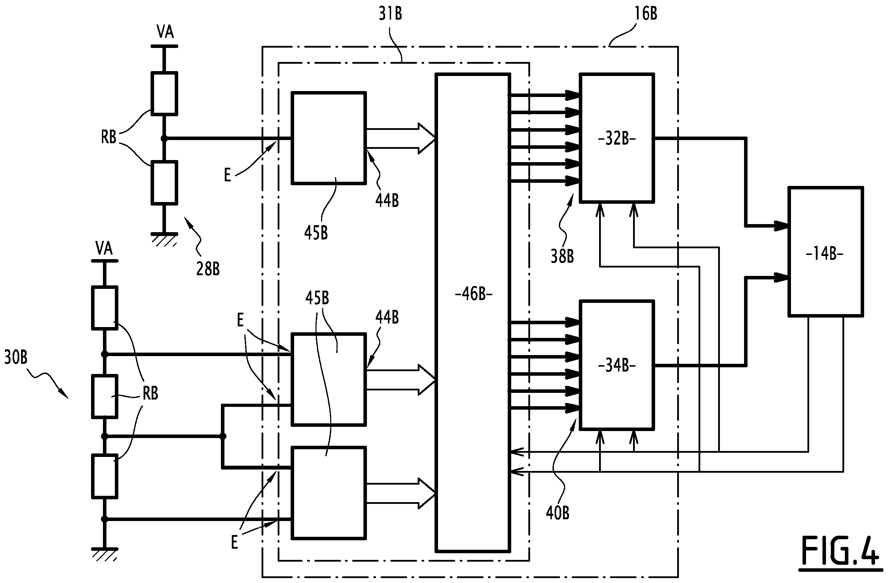

L'organe de calibrage 16B, illustré de manière détaillée à la figure 4, comprend un premier 32B, et respectivement un deuxième 34B, organes de lecture des premier, et respectivement deuxième, identifiants prédéterminés. L'organe de calibrage 16B comprend également un organe d'adaptation 31B recevant en entrée, pour chaque premier organe de mémorisation, l'identifiant prédéterminé, et connecté en sortie à des entrées 38B, 40B des premier 32B et deuxième 34B organes de lecture.

Le processeur 24B est adapté pour exécuter des logiciels mémorisés par la mémoire 26B.

La mémoire 26B est similaire à la mémoire 26A décrite ci-dessus, et est propre à mémoriser un logiciel 35B de pilotage de l'organe de déclenchement, un logiciel 36B de contrôle de l'organe de calibrage 16B et un logiciel 37B de détermination d'une ou de données de calibrage. La mémoire 26B est également apte à mémoriser la donnée prédéterminée D correspondant à la configuration du deuxième disjoncteur 4B.

Le logiciel de contrôle 36B est propre, lorsqu'il est exécuté par le processeur 24B, à générer une commande de lecture et à transmettre à chaque organe de lecture 32B, 34B la commande de lecture générée.

Le premier organe de mémorisation 28B est adapté pour mémoriser un premier identifiant prédéterminé, en fonction duquel l'unité de déclenchement 14B est propre à commander l'ouverture des contacts du disjoncteur 4B.

De même, le deuxième organe de mémorisation 30B est adapté pour mémoriser un deuxième identifiant prédéterminé, en fonction duquel l'unité de déclenchement 14B est propre à commander l'ouverture des contacts du disjoncteur 4B.

Les premier 28B et deuxième 30B organes de mémorisation sont électriquement connectés à des entrées E de l'organe d'adaptation 31B.

Les premier 28B et deuxième 30B organes de mémorisation sont, par exemple, installés dans le disjoncteur lors de sa fabrication en usine.

Les premier 28B et deuxième 30B organes de mémorisation comprennent des résistances RB de valeurs réglables, alimentées en tension via le potentiel prédéterminé VA lorsque les contacts du disjoncteur 4B sont fermés ou lorsque l'unité de déclenchement électronique 14B est alimenté par une source d'alimentation quelconque, et propres à faire varier une grandeur électrique transmise à l'organe d'adaptation 31B. Les résistances RB de chaque organe de mémorisation 28B, 30B sont connectés les unes aux autres entre la masse électrique M et le potentiel prédéterminé. Les identifiants prédéterminés sont ainsi mémorisés par les premier 28B et deuxième 30B organes de mémorisation sous la forme d'une grandeur électrique, telle qu'une tension, c'est-à-dire sous un format analogique.

Dans l'exemple de la figure 4, le premier organe de mémorisation 28B comprend deux résistances réglables RB, tandis que le deuxième organe de mémorisation 30B comprend trois résistances réglables RB.

L'organe d'adaptation 31B reçoit sur ses entrées, pour chaque premier 28B, respectivement deuxième 30B, organe de mémorisation, la grandeur électrique correspondant aux premier, respectivement deuxième, identifiants prédéterminés. L'organe d'adaptation 31B est adapté pour fournir aux premier 32B et deuxième 34B organes de lecture sur leurs entrées respectives 38B, 40B, le premier, respectivement deuxième, identifiants prédéterminés sous un format numérique prédéterminé.

L'organe d'adaptation 31B est propre, pour chaque organe de mémorisation 28B, 30B, à fournir à l'un des organes de lecture 32B, 34B, sur les entrées de l'organe de lecture 32B, 34B, l'identifiant prédéterminé qui comporte un deuxième nombre de bits de vérification inférieur ou égal au premier nombre de bits de vérification de chaque identifiant prédéterminé dans le premier disjoncteur 4A, c'est-à-dire dans l'organe de calibrage 16A. Le deuxième nombre de bits de vérification est de préférence égal à 1.

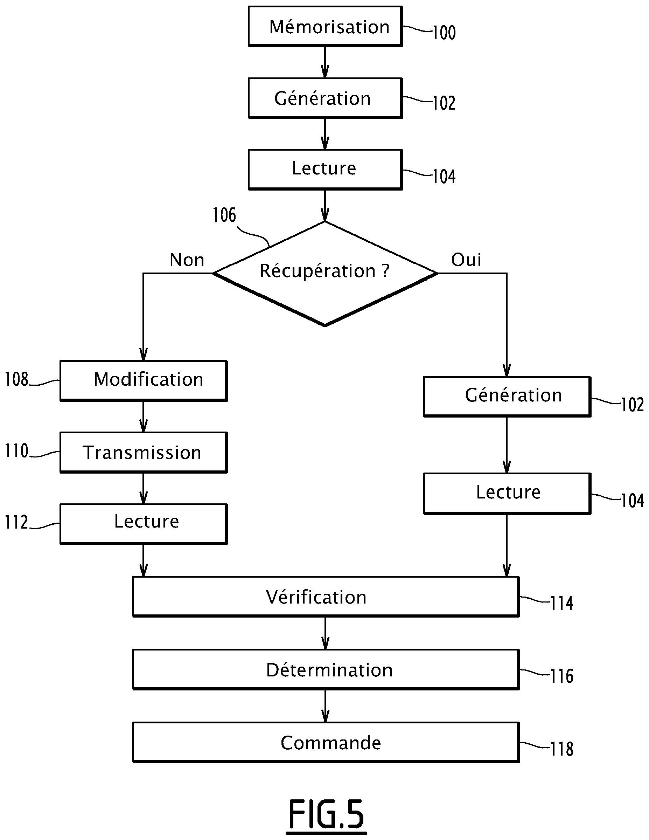

Chaque identifiant prédéterminé comprend, selon son format numérique prédéterminé, en entrée de l'organe de lecture 32B, 34B correspondant, au moins un bit de donnée et au moins un bit de vérification, et plus spécifiquement dans l'exemple de la figure 5, cinq bits de donnée et un bit de vérification, tel qu'un bit de parité.

L'organe d'adaptation 31B est adapté pour, en réponse à la transmission de la commande de lecture, convertir dans le format numérique prédéterminé les premier et deuxième identifiants prédéterminés.

L'organe d'adaptation 31B comprend des convertisseurs analogique-numérique 45B adaptés pour convertir les grandeurs électriques en grandeurs numériques. L'organe d'adaptation 31B comprend également un organe de conversion 46B, tel qu'un circuit logique programmable, connecté à des sorties 44B des convertisseurs 45B, et adapté pour transmettre aux organes de lecture 32B, 34B, les identifiants prédéterminés dans le format numérique prédéterminé, suite à la transmission de la commande de lecture à l'organe de calibrage 16B.

Dans le même temps, les organes de lecture 32B, 34B sont adaptés pour, en réponse à la transmission de la commande de lecture, lire le premier et le deuxième identifiants prédéterminés et envoyer à l'unité de déclenchement 14B le premier et le deuxième identifiants prédéterminés lus.

Les organes de lecture 32B, 34B sont propres à recevoir simultanément la commande de lecture. Les organes de lecture 32B, 34B sont adaptés pour, en réponse à la transmission de la commande de lecture, lire simultanément le premier identifiant prédéterminé, respectivement le deuxième identifiant prédéterminé, transmis par l'organe d'adaptation 31B et envoyer à l'unité de déclenchement 14B, les premier, respectivement deuxième, identifiants.

L'organe de calibrage 16B est adapté pour, en réponse à la transmission de la commande de lecture de chaque identifiant prédéterminé, lire chaque identifiant prédéterminé et envoyer à l'unité de déclenchement 14B chaque identifiant dans un délai inférieur à 300 µs, de préférence inférieur à 200 µs.

Comme présenté pour le premier mode de réalisation, le logiciel de contrôle 36B est propre à être exécuté par le processeur 24B, et à générer la commande de lecture puis transmettre la commande de lecture générée, lorsque le courant mesuré par l'organe de mesure du courant 18B est supérieur à une valeur seuil de courant prédéterminé ou, plus généralement, lorsque l'unité de déclenchement 14B est alimentée électriquement. La commande de lecture générée et transmise correspond alors à celle présentée dans le premier mode de réalisation.

Cependant, pendant la génération de la commande de lecture et pendant la transmission de la commande de lecture, le logiciel de contrôle 36B est propre à lire la donnée prédéterminée D. Lorsque la donnée prédéterminée D correspond à la configuration analogique, ce qui est le cas pour le deuxième disjoncteur 4B, le logiciel de contrôle 36B est propre à modifier la commande de lecture transmise à l'organe de calibrage 16B. La commande de lecture est modifiée pour recommencer la lecture de chaque identifiant prédéterminé. En effet, l'unité de déclenchement 14B est adaptée pour transmettre la commande de lecture et récupérer des informations transmises par les organes de lecture, alors que les convertisseurs analogiques-numériques 45B ne transmettent pas forcément des grandeurs numériques stables à l'organe de conversion 46B. Il est ainsi nécessaire de recommencer la lecture des bits aux entrées des organes de lecture 32B, 34B après un temps prédéterminé nécessaire à la conversion des grandeurs électriques selon le format numérique prédéterminé, par l'organe d'adaptation 31B. Le temps prédéterminé est par exemple égal à 40 µs.

La commande de lecture est modifiée afin de commander la lecture des cinq bits de donnée et du bit de vérification. Le temps de transmission des identifiants prédéterminés à l'unité de déclenchement 14B, suite à la génération de la commande de lecture, est le même dans le premier et dans le deuxième mode de réalisation. En effet, le fait que dans le deuxième mode de réalisation, le nombre de bits à lire en entrée des organes de lecture soit inférieur par rapport au premier mode de réalisation, permet de réduire le nombre de bits à lire dans le deuxième mode de réalisation et donc la prise en compte du temps prédéterminé.

Le fonctionnement des disjoncteurs 4A et 4B va désormais être présenté à l'aide de la figure 5 présentant un procédé de calibrage de l'unité de déclenchement 14A, 14B des premier 4A et deuxième 4B disjoncteurs.

Lors d'une première étape de mémorisation 100, la mémoire 26A, 26B mémorise la donnée D prédéterminé. La donnée prédéterminée est, par exemple, fournie par l'opérateur à la mémoire 26A, 26B via une opération de saisie de la donnée D.

Puis, lors d'une étape suivante de génération 102, le logiciel de contrôle génère la commande de lecture et transmet la commande de lecture générée à l'organe de calibrage 16A, 16B. Comme présenté précédemment, la commande de lecture est, par exemple, générée lorsque l'organe de mesure 18A, 18B mesure un courant dont l'intensité est supérieur à la valeur de seuil prédéterminée ou, plus généralement, lorsque l'unité de déclenchement 14A, 14B est alimentée par une source d'alimentation quelconque. La commande de lecture est alors transmise à l'organe de calibrage 16A, 16B.

Ensuite, lors d'une première étape de lecture 104, l'organe de calibrage 16A, 16B et, plus précisément, les organes de lecture 32A, 32B, 34A, 34B lisent les identifiants prédéterminés et envoient les premier et deuxième identifiants lus vers l'unité de déclenchement 14A, 14B, en fonction de la commande de lecture et en réponse à la commande de lecture. L'unité de déclenchement 14A, 14B reçoit alors les bits formant les identifiants prédéterminés. La première étape de lecture 104 et l'étape de génération 102 ont lieu parallèlement pendant une durée prédéterminée inférieure à 300 µs, de préférence à 200 µs.

Simultanément aux étapes de génération 102 et de lecture 104, le logiciel de contrôle 36A, 36B réalise une étape de récupération 106, au cours de laquelle il récupère la donnée prédéterminée D dans la mémoire 26A, 26B et identifie la donnée prédéterminée D récupérée. Suite à l'étape de récupération 106, le logiciel de contrôle connait le type de configuration du disjoncteur 4A, 4B.

Si la donnée de configuration récupérée au cours de l'étape de récupération 106 correspond à la configuration du premier disjoncteur 4A, alors la commande de lecture reste inchangée et correspond à une commande de lecture prédéterminée, par exemple mémorisée dans la mémoire 26A. Les étapes de génération 102 et de lecture 104 sont alors exécutées jusqu'à ce que tous les bits des premier et deuxième identifiants aient été transmis à l'unité de déclenchement 14A, 14B.

Si la donnée prédéterminée D, récupérée au cours de l'étape de récupération 106, correspond à la configuration du deuxième disjoncteur 4B, alors le logiciel de contrôle 36B réalise une étape de modification 108, au cours de laquelle la commande de lecture est modifiée tel que présenté précédemment. Des paramètres permettant de réaliser cette modification sont, par exemple, mémorisés dans la mémoire 26B.

Ensuite, lors d'une étape suivante de transmission 110, le logiciel de contrôle 36A, 36B transmet à l'organe de calibrage 14A, 14B la commande de lecture modifiée. Puis, lors d'une deuxième étape de lecture 112, les organes de lecture 32A, 32B, 34A, 34B lisent les premier et deuxième identifiants et envoient les premier et deuxième identifiants prédéterminés lus vers l'unité de déclenchement 14A, 14B, en fonction de la commande de lecture modifiée et en réponse à la commande de lecture modifiée.

Suite à la première étape de lecture 104 ou à la deuxième étape de lecture 112, lorsque tous les bits des premier et deuxième identifiants ont été transmis à l'unité de déclenchement 14A, 14B, alors une étape 114 de vérification est réalisée. Au cours de l'étape de vérification 114, le logiciel de contrôle vérifie, pour chaque identifiant prédéterminé, la validité des bits de donnée lus et transmis par les organes de lecture, en fonction du ou des bits de vérifications lu et transmis par les organes de lectures 32A, 34A, 32B, 34B.

Si, lors de l'étape de vérification 114, le logiciel de contrôle 36A, 36B détecte que les bits de donnée envoyés par l'un des organes de lecture 32A, 34A, 32B, 34B ne sont pas valides ou sont erronés, alors le logiciel de contrôle 36A, 36B fixe la valeur des cinq bits de donnée de l'identifiant prédéterminé concerné égale à une valeur de défaut et transmet les bits de donnée au logiciel de détermination 37A, 37B.

Si, lors de l'étape de vérification 114, le logiciel de contrôle 36A, 36B détecte que les bits de donnée transmis par les organes de lecture 32A, 34A, 32B, 34B sont valides, alors le logiciel de contrôle 36A, 36B transmet au logiciel de détermination 37A, 37B les cinq bits de donnée des premier et deuxième identifiants.

Ensuite, lors d'une étape de détermination 116, le logiciel de détermination 37A, 37B associe, aux cinq bits de donnée correspondant au premier identifiant, une première donnée de calibrage, et aux cinq bits de donnée correspondant, au deuxième identifiant une deuxième donnée de calibrage.

Le logiciel de pilotage 35A, 35B et l'organe de déclenchement 22A, 22B commande alors, au cours d'une étape de commande 118, l'ouverture du disjoncteur en fonction des données de calibrage et du courant mesuré par l'organe de mesure 18A, 18B.

Les organes de calibrage 16A, 16B permettent de transmettre de manière fiable et rapide les identifiants prédéterminés à l'unité de déclenchement 14A, 14B. L'unité de déclenchement est ainsi apte à déterminer les données de calibrage en fonction des identifiants prédéterminés de manière fiable et rapide. La sécurité d'une installation électrique comprenant des disjoncteurs 4A, 4B munis de tels organes de calibrage est ainsi améliorée, notamment lors de la fermeture des contacts mobiles du disjoncteur sur un court-circuit.

De plus, le fait de contrôler les bits de donnée reçus par l'unité de déclenchement en fonction d'un ou de plusieurs bits de vérification permet d'améliorer la fiabilité d'un disjoncteur comprenant de tels organes de calibrage 16A, 16B.

Les organes de calibrage 16A, 16B, ont, lorsqu'ils sont piloté par l'unité de déclenchement 14A, 14B un temps de réponse à la commande de lecture identique.

L'organe de calibrage 16B du deuxième disjoncteur 4B est destiné à être installé sur des disjoncteurs existants, comprenant des organes de mémorisation des identifiants prédéterminés sous un format analogique et dans lesquels la fiabilité et la rapidité de la transmission des identifiants prédéterminés sont ainsi améliorées.

L'organe de calibrage 16A est destiné à être installé dans un disjoncteur tel que le premier disjoncteur 4A. Il permet d'améliorer la fiabilité et la rapidité de la transmission des identifiants prédéterminés à l'unité de déclenchement 14A.

En variante, les organes de lecture 32A, 34A, 32B, 34B sont des registres à décalage série-série ou série-parallèle ou encore parallèle-parallèle.

Chaque identifiant prédéterminé est un paramètre associé à un des disjoncteurs 4A, 4B, par exemple un paramètre relatif à une valeur de calibre de déclenchement de l'ouverture des contacts du disjoncteur 4A, 4B.

## Revendications

1. Disjoncteur (4A ; 4B) comprenant une unité électronique (14A ; 14B) de déclenchement et un organe (16A ; 16B) de calibrage de l'unité électronique de déclenchement (14A ; 14B), l'unité de déclenchement (14A ; 14B) comprenant un organe (22A ; 22B) de déclenchement de l'ouverture de contacts du disjoncteur, des moyens de pilotage (35A; 35B) de l'organe de déclenchement (22A ; 22B), et des moyens de contrôle (36A ; 36B) de l'organe de calibrage,
l'organe de calibrage (16A ; 16B) comprenant au moins un organe de lecture (32A, 34A ; 32B, 34B) adapté pour lire le contenu d'au moins un premier organe de mémorisation (28A, 30A ; 28B, 30B), chaque premier organe de mémorisation (28A, 30A ; 28B, 30B) étant adapté pour mémoriser un identifiant prédéterminé, chaque identifiant prédéterminé étant un paramètre associé au disjoncteur (4A ; 4B), chaque premier organe de mémorisation (28A, 30A ; 28B, 30B) étant compris soit dans l'organe de calibrage (16A ; 16B) soit dans le disjoncteur (4A, 4B),
les moyens de contrôle (36A ; 36B) de l'organe de calibrage étant adaptés pour générer et transmettre à chaque organe de calibrage une commande de lecture de chaque identifiant prédéterminé, l'unité de déclenchement (14A ; 14B) étant adaptée pour commander l'ouverture des contacts du disjoncteur en fonction de chaque identifiant prédéterminé,
**caractérisé en ce que** chaque organe de lecture (32A, 34A ; 32B, 34B) comporte un registre à décalage adapté pour, en réponse à la transmission de la commande de lecture, lire chaque identifiant prédéterminé et envoyer à l'unité de déclenchement (14A ; 14B) chaque identifiant prédéterminé lu,
chaque organe de lecture (32A, 34A ; 32B, 34B) comprenant une ou plusieurs entrées propres à recevoir chacune au moins l'un des identifiants prédéterminés, chaque identifiant prédéterminé comprenant au moins un bit de donnée et au moins un bit de vérification, chaque identifiant étant un paramètre relatif à une valeur de calibre de déclenchement de l'ouverture des contacts du disjoncteur (4A ; 4B),
les moyens de contrôle (36A ; 36B) étant adaptés pour vérifier en fonction du ou des bits de vérification la validité du ou des bits de donnée lus et envoyés par chaque organe de lecture.

2. Disjoncteur (4A ; 4B) selon la revendication 1, dans lequel chaque registre à décalage comprend un ensemble de bascules synchrones, commandées via la commande de lecture.

3. Disjoncteur (4A ; 4B) selon l'une des revendications précédentes, dans lequel chaque organe de lecture (32A, 34A ; 32B, 34B) est connecté à un premier organe de mémorisation (28A, 30A ; 28B, 30B) correspondant, et est adapté pour mémoriser l'identifiant de manière temporaire seulement lorsqu'il est alimenté électriquement.

4. Disjoncteur (4A ; 4B) selon l'une des revendications précédentes, dans lequel l'organe de calibrage est adapté pour, en réponse à la transmission de la commande de lecture de chaque identifiant prédéterminé, lire chaque identifiant prédéterminé mémorisé dans chaque premier organe de mémorisation (28A, 30A ; 28B, 30B) et envoyer à l'unité de déclenchement (14A, 14B) chaque identifiant lu, dans un délai inférieur à 300 µs, de préférence inférieur à 200 µs.

5. Disjoncteur (4A) selon l'une des revendications précédentes, dans lequel chaque organe de lecture (32A, 34A) comporte un registre à décalage parallèle-série comprenant plusieurs entrées (38A, 40A) en parallèle et une unique sortie (41A, 42A), et dans lequel l'organe de calibrage (16A) comprend chaque premier organe de mémorisation (28A, 30A), et chaque premier organe de mémorisation (28A, 30A) comprend des résistances (RA) connectées chacune d'une part, soit à une masse électronique (M), soit à un potentiel prédéterminé (VA) différent de la masse et, d'autre part, à l'une des entrées en parallèle (38A, 40A) de l'un des registres à décalage.

6. Disjoncteur (4B) selon l'une des revendications 1 à 4, comprenant chaque premier organe de mémorisation (32B, 34B), chaque premier organe de mémorisation (32B, 34B) comprenant au moins une résistance (RB) de valeur réglable, l'identifiant prédéterminé correspondant à une grandeur électrique associée à la ou aux résistances réglables (RB), l'organe de calibrage (16B) comprenant un organe d'adaptation (31B) recevant en entrée, pour chaque premier organe de mémorisation (28B, 30B), la grandeur électrique correspondante et étant adapté pour fournir à l'un des organes de lecture (32B, 34B) l'identifiant prédéterminé.

7. Disjoncteur (4A ; 4B) selon l'une des revendications précédentes, dans lequel l'organe de calibrage comprend plusieurs organes de lecture (32A, 34A ; 32B, 34B) chacun associé à un premier organe de mémorisation différent (28A, 30A ; 28B, 30B).

8. Ensemble (2) d'au moins deux disjoncteurs (4A, 4B), comprenant au moins :
- un premier disjoncteur (4A) selon la revendication 5, dans lequel chaque premier organe de mémorisation (28A, 30A) est adapté pour mémoriser l'identifiant prédéterminé qui comporte un premier nombre prédéterminé de bits de vérification supérieur ou égal à 2, de préférence égal à 3, et
- un deuxième disjoncteur (4B) selon la revendication 6, dans lequel l'organe d'adaptation (31B) est propre, pour chaque premier organe de mémorisation (28B, 30B), à fournir à l'un des organes de lecture (32B, 34B), l'identifiant prédéterminé comportant un deuxième nombre de bits de vérification inférieur ou égal au premier nombre de bits de vérification de chaque identifiant prédéterminé dans le premier disjoncteur (4A), le deuxième nombre de bits de vérification étant de préférence égal à 1.

9. Disjoncteur (4A ; 4B) selon l'une quelconque des revendications 1 à 7, dans lequel l'unité de déclenchement électronique (14A ; 14B) comprend des moyens de détermination (37A ; 37B) propres à associer à chaque identifiant prédéterminé, envoyé par chaque organe de lecture (32A, 34A ; 32B, 34B), une donnée de calibrage, la ou les données de calibrage définissant au moins une condition de commande de l'ouverture des contacts du disjoncteur (4A ; 4B) et les moyens de pilotage (35A ; 35B) étant adaptés pour commander l'ouverture des contacts en fonction de la ou des données de calibrage.

10. Procédé de calibrage d'une unité électronique de déclenchement (14A ; 14B) d'un disjoncteur (4A ; 4B) par un organe de calibrage (16A ; 16B), l'unité de déclenchement (14A ; 14B) comprenant un organe de déclenchement (22A ; 22B) de l'ouverture de contacts du disjoncteur et des moyens de pilotage (35A ; 35B) de l'organe de déclenchement (22A ; 22B), l'organe de calibrage (16A ; 16B) comprenant au moins un organe de lecture (32A, 34A ; 32B, 34B), adapté pour lire le contenu d'au moins un premier organe de mémorisation (28A, 30A ; 28B, 30B), chaque premier organe de mémorisation (28A, 30A ; 28B, 30B) étant adapté pour mémoriser un identifiant prédéterminé, chaque identifiant prédéterminé étant un paramètre associé au disjoncteur (4A ; 4B), chaque premier organe de mémorisation (28A, 30A ; 28B, 30B) étant compris soit dans l'organe de calibrage (16A ; 16B) soit dans le disjoncteur (4A, 4B),
le procédé comprenant les étapes suivantes :
- a) la génération (102) d'une commande de lecture de chaque identifiant prédéterminé,
- b) la transmission (102) de la commande de lecture à l'organe de calibrage,
- d) la commande (118) de l'ouverture des contacts du disjoncteur en fonction de chaque identifiant prédéterminé,
**caractérisé en ce que** l'organe de lecture (32A, 34A ; 32B, 34B) comporte un registre à décalage, et **en ce que** précédemment à l'étape de commande (118), le procédé comprend les étapes suivantes :
- b') la lecture (104), par le ou les organes de lecture (32A, 34A ; 32B, 34B), de chaque identifiant prédéterminé et
- b") l'envoi (104), à l'unité de déclenchement (14A ; 14B), de chaque identifiant prédéterminé lu lors de l'étape b'),
chaque organe de lecture (32A, 34A ; 32B, 34B) comprenant une ou plusieurs entrées propres à recevoir chacune au moins l'un des identifiants prédéterminés, chaque identifiant prédéterminé comprenant au moins un bit de donnée et au moins un bit de vérification, chaque identifiant étant un paramètre relatif à une valeur de calibre de déclenchement de l'ouverture des contacts du disjoncteur (4A ; 4B),
le procédé comprenant, suite à l'étape d'envoi (104) et précédemment à l'étape de commande (118), l'étape suivante :
- c) la vérification (114) en fonction du ou des bits de vérification de la validité du ou des bits de donnée lus et envoyés par chaque organe de lecture.

11. Procédé selon la revendication 10, dans lequel les étapes de lecture (104) et de transmission (102) ont lieu parallèlement pendant une durée prédéterminée et précédemment à l'étape de génération (102), le procédé comprend l'étape suivante :
- la mémorisation (100) dans l'unité de déclenchement (14A ; 14B) d'une donnée prédéterminée (D) correspondant à une configuration du disjoncteur,
et lors de l'étape de lecture, le procédé comprend les étapes suivantes :
- la récupération (106) de la donnée prédéterminée,
- la modification (108) de la commande de lecture en fonction de la donnée prédéterminée, la commande de lecture étant modifiée pour recommencer la lecture de chaque identifiant prédéterminé lorsque la donnée prédéterminée est égale à une valeur prédéterminée.

## Patentansprüche

1. Ausschalter (4A, 4B), welcher eine elektronische Einheit (14A, 14B) zum Auslösen und ein Organ (16A, 16B) zum Kalibrieren der elektronischen Einheit zum Auslösen (14A, 14B) aufweist, wobei die Einheit zum Auslösen (14A, 14B) aufweist ein Organ (22A, 22B) zum Auslösen des Öffnens von Kontakten des Ausschalters, Mittel zur Steuerung (35A, 35B) des Organs zum Auslösen (22A, 22B) und Mittel zum Steuern (36A, 36B) des Organs zum Kalibrieren,
wobei das Organ zum Kalibrieren (16A, 16B) aufweist zumindest ein Organ zum Lesen (32A, 34A, 32B, 34B), welches angepasst ist, um den Inhalt von zumindest einem ersten Organ zum Speichern (28A, 30A, 28B, 30B) zu lesen, wobei jedes erste Organ zum Speichern (28A, 30A, 28B, 30B) angepasst ist, um einen vorbestimmten Identifikator zu speichern, wobei jeder vorbestimmte Identifikator ein Parameter ist, welcher mit dem Ausschalter (4A, 4B) assoziiert ist, wobei jedes erste Organ zum Speichern (28A, 30A, 28B, 30B) entweder im Organ zum Kalibrieren (16A, 16B) oder im Ausschalter (4A, 4B) enthalten ist,
wobei die Mittel zum Steuern (36A, 36B) des Organs zum Kalibrieren angepasst sind, um einen Befehl zum Lesen jedes vorbestimmten Identifikators zu erzeugen und diesen zu jedem Organ zum Kalibrieren zu übertragen, wobei die Einheit zum Auslösen (14A, 14B) angepasst ist, um das Öffnen der Kontakte des Ausschalters in Abhängigkeit von jedem vorbestimmten Identifikator zu steuern,
**dadurch gekennzeichnet, dass** jedes Organ zum Lesen (32A, 34A, 32B, 34B) ein Schieberegister aufweist, welches angepasst ist, um in Antwort auf das Übertragen des Befehls zum Lesen jeden vorbestimmten Identifikator zu lesen und jeden gelesenen vorbestimmten Identifikator zur Einheit zum Auslösen (14A, 14B) zu senden,
wobei jedes Organ zum Lesen (32A, 34A, 32B, 34B) einen oder mehrere Eingänge aufweist, welche jeweils imstande sind, zumindest einen der vorbestimmten Identifikatoren zu empfangen, wobei jeder vorbestimmte Identifikator zumindest ein Datenbit und zumindest ein Verifikationsbit aufweist, wobei jeder Identifikator ein Parameter ist, welcher einen Wert zum Kalibrieren des Auslösens des Öffnens der Kontakte des Ausschalters (4A, 4B) betrifft,
wobei die Mittel zum Steuern (36A, 36B) angepasst sind, um in Abhängigkeit von dem oder von den Verifikationsbits die Gültigkeit des oder der Datenbits, welche mittels jedes Organs zum Lesen gelesen und gesendet werden, zu verifizieren.

2. Ausschalter (4A, 4B) gemäß Anspruch 1, wobei jedes Schieberegister eine Anordnung mit synchronen Flipflops aufweist, welche via den Befehl zum Lesen gesteuert werden.

3. Ausschalter (4A, 4B) gemäß einem der vorherigen Ansprüche, wobei jedes Organ zum Lesen (32A, 34A, 32B, 34B) mit einem korrespondierenden ersten Organ zum Speichern (28A, 30A, 28B, 30B) verbunden ist und angepasst ist, um den Identifikator auf vorübergehende Weise zu speichern, nur wenn es elektrisch versorgt wird.

4. Ausschalter (4A, 4B) gemäß einem der vorherigen Ansprüche, wobei das Organ zum Kalibrieren angepasst ist, um in Antwort auf das Übertragen des Befehls zum Lesen jedes vorbestimmten Identifikators jeden vorbestimmten Identifikator, welcher in jedem ersten Organ zum Speichern (28A, 30A, 28B, 30B) gespeichert ist, zu lesen und zur Einheit zum Auslösen (14A, 14B) jeden gelesenen Identifikator zu senden, in einer Zeitspanne, welche kleiner als 300 µs, vorzugsweise kleiner als 200 µs, ist.

5. Ausschalter (4A) gemäß einem der vorherigen Ansprüche, wobei jedes Organ zum Lesen (32A, 34A) ein parallel-serielles Schieberegister aufweist, welches mehrere parallele Eingänge (38A, 40A) und einen einzigen Ausgang (41A, 42A) aufweist, und wobei das Organ zum Kalibrieren (16A) jedes erste Organ zum Speichern (28A, 30A) aufweist, und jedes erste Organ zum Speichern (28A, 30A) Widerstände (RA) aufweist, welche alle verbunden sind einerseits entweder mit einer elektronischen Masse (M) oder einem vorbestimmten Potential (VA), welches von der Masse verschieden ist, und andererseits mit einem der parallelen Eingänge (38A, 40A) von einem der Schieberegister.

6. Ausschalter (4B) gemäß einem der Ansprüche 1 bis 4, welcher jedes erste Organ zum Speichern (32B, 34B) aufweist, wobei jedes erste Organ zum Speichern (32B, 34B) zumindest einen Widerstand (RB) mit einstellbarem Wert aufweist, wobei der vorbestimmte Identifikator zur einer elektrischen Größe korrespondiert, welche mit dem oder den einstellbaren Widerständen (RB) assoziiert ist, wobei das Organ zum Kalibrieren (16B) ein Organ zum Anpassen (31B) aufweist, welches am Eingang, für jedes erste Organ zum Speichern (28B, 30B), die korrespondierende elektrische Größe empfängt und welches angepasst ist, um einem der Organe zum Lesen (32B, 34B) den vorbestimmten Identifikator bereitzustellen.

7. Ausschalter (4A, 4B) gemäß einem der vorherigen Ansprüche, wobei das Organ zum Kalibrieren mehrere Organe zum Lesen (32A, 34A, 32B, 34B) aufweist, wobei jedes mit einem unterschiedlichen ersten Organ zum Speichern (28A, 30A, 28B, 30B) assoziiert ist.

8. Gruppe (2) mit zumindest zwei Ausschaltern (4A, 4B), welche zumindest aufweist:
- einen ersten Ausschalter (4A) gemäß Anspruch 5, wobei jedes erste Organ zum Speichern (28A, 30A) angepasst ist, um den vorbestimmten Identifikator zu speichern, welcher eine erste vorbestimmte Anzahl an Verifikationsbits aufweist, welche größer oder gleich 2, vorzugsweise gleich 3, ist, und
- einen zweiten Ausschalter (4B) gemäß Anspruch 6, wobei das Organ zum Anpassen (31 B) imstande ist, für jedes erste Organ zum Speichern (28A, 30B), einem der Organe zum Lesen (32B, 34B) den vorbestimmten Identifikator bereitzustellen, welcher eine zweite Anzahl an Verifikationsbits aufweist, welche kleiner oder gleich der ersten Anzahl an Verifikationsbits jedes vorbestimmten Identifikators im ersten Ausschalter (4A) ist, wobei die zweite Anzahl an Verifikationsbits verzugsweise gleich 1 ist.

9. Ausschalter (4A, 4B) gemäß irgendeinem der Ansprüche 1 bis 7, wobei die elektronische Einheit zum Auslösen (14A, 14B) Mittel zum Ermitteln (37A, 37B) aufweist, welche imstande sind, mit jedem vorbestimmten Identifikator, welcher mittels jedes Organs zum Lesen (32A, 34A, 32B, 34B) gesendet wird, ein Kalibrierung-Datenelement zu assoziieren, wobei das oder die Kalibrierung-Datenelemente zumindest eine Bedingung zum Steuern des Öffnens der Kontakte des Ausschalters (4A, 4B) definieren und die Mittel zur Steuerung (35A, 35B) angepasst sind, um das Öffnen der Kontakte in Abhängigkeit von dem oder von den Kalibrierung-Datenelementen zu steuern.

10. Verfahren zum Kalibrieren einer elektronischen Einheit zum Auslösen (14A, 14B) eines Ausschalters (4A, 4B) mittels eines Organs zum Kalibrieren (16A, 16B), wobei die Einheit zum Auslösen (14A, 14B) aufweist ein Organ zum Auslösen (22A, 22B) des Öffnens von Kontakten des Ausschalters und Mittel zur Steuerung (35A, 35B) des Organs zum Auslösen (22A, 22B), wobei das Organ zum Kalibrieren (16A, 16B) zumindest ein Organ zum Lesen (32A, 34A, 32B, 34B) aufweist, welches angepasst ist, um den Inhalt von zumindest einem ersten Organ zum Speichern (28A, 30A, 28B, 30B) zu lesen, wobei jedes erste Organ zum Speichern (28A, 30A, 28B, 30B) angepasst ist, um einen vorbestimmten Identifikator zu speichern, wobei jeder vorbestimmte Identifikator ein Parameter ist, welcher mit dem Ausschalter (4A, 4B) assoziiert ist, wobei jedes erste Organ zum Speichern (28A, 30A, 28B, 30B) entweder im Organ zum Kalibrieren (16A, 16B) oder im Ausschalter (4A, 4B) enthalten ist,
wobei das Verfahren die folgenden Schritte aufweist:
- a) das Erzeugen (102) eines Befehls zum Lesen jedes vorbestimmten Identifikators,
- b) das Übertragen (102) des Befehls zum Lesen zum Organ zum Kalibrieren,
- d) das Steuern (118) des Öffnens der Kontakte des Ausschalters in Abhängigkeit von jedem vorbestimmten Identifikator,
**dadurch gekennzeichnet, dass** das Organ zum Lesen (32A, 34A, 32B, 34B) ein Schieberegister aufweist, und dadurch, dass das Verfahren vor dem Schritt des Steuerns (118) die folgenden Schritte aufweist:
- b') das Lesen (104) mittels des oder der Organe zum Lesen (32A, 34A, 32B, 34B) jedes vorbestimmten Identifikators und
- b") das Senden (104) zur Einheit zum Auslösen (14A, 14B) jedes vorbestimmten Identifikators, welcher während des Schritts b') gelesen wird,
wobei jedes Organ zum Lesen (32A, 34A, 32B, 34B) einen oder mehrere Eingänge aufweist, welche jeweils imstande sind, zumindest einen der vorbestimmten Identifikatoren zu empfangen, wobei jeder vorbestimmte Identifikator zumindest ein Datenbit und zumindest ein Verifikationsbit aufweist, wobei jeder Identifikator ein Parameter ist, welcher einen Wert zum Kalibrieren des Auslösens des Öffnens der Kontakte des Ausschalters (4A, 4B) betrifft,
wobei das Verfahren im Anschluss an den Schritt des Sendens (104) und vor dem Schritt des Steuerns (118) den folgenden Schritt aufweist:
- c) das Verifizieren (114) in Abhängigkeit von dem oder von den Verifikationsbits der Gültigkeit des oder der Datenbits, welche mittels jedes Organs zum Lesen gelesen und gesendet werden.

11. Verfahren gemäß Anspruch 10, wobei die Schritte des Lesens (104) und des Übertragens (102) während einer vorbestimmten Dauer parallel stattfinden und das Verfahren vor dem Schritt des Erzeugens (102) den folgenden Schritt aufweist:
- das Speichern (100) in der Einheit zum Auslösen (14A, 14B) eines vorbestimmten Datenelements (D), welches zu einer Konfiguration des Ausschalters korrespondiert,
und das Verfahren während des Schritts des Lesens die folgenden Schritte aufweist:
- das Wiedererlangen (106) des vorbestimmten Datenelements,
- das Modifizieren (108) des Befehls zum Lesen in Abhängigkeit von dem vorbestimmten Datenelement, wobei der Befehl zum Lesen modifiziert wird, um das Lesen jedes vorbestimmten Identifikators wieder zu beginnen, wenn das vorbestimmte Datenelement gleich einem vorbestimmten Wert ist.

## Claims

1. Circuit breaker (4A; 4B) comprising an electronic trigger unit (14A; 14B) and a device (16A; 16B) for calibration of the electronic trigger unit (14A; 14B), the trigger unit (14A; 14B) comprising a device (22A; 22B) for triggering opening of contacts of the circuit breaker, control means (35A; 35B) of the trigger device (22A; 22B), and control means (36A; 36B) of the calibration device,
the calibration device (16A; 16B) comprising at least one read device (32A, 34A; 32B, 34B) adapted to read the content of at least one first memory device (28A, 30A; 28B, 30B), each first memory device (28A, 30A; 28B, 30B) being adapted to memorise a predetermined identifier, each predetermined identifier being a parameter associated with the circuit breaker (4A; 4B), each first memory device (28A, 30A; 28B, 30B) being included either in the calibration device (16A; 16B) or in the circuit breaker (4A, 4B),
the control means (36A; 36B) of the calibration device being adapted to generate and transmit, to each calibration device, a command to read each predetermined identifier, the trigger unit (14A; 14B) being adapted to command opening of the contacts of the circuit breaker as a function of each predetermined identifier,
**characterised in that** each read device (32A, 34A; 32B, 34B) comprises a shift register adapted to read, in response to the transmission of the read command, each predetermined identifier and to send to the trigger unit (14A; 14B) each read predetermined identifier,
each read device (32A, 34A; 32B, 34B) comprising one or more inputs each able to receive at least one of the predetermined identifiers, each predetermined identifier comprising at least one data bit and at least one verification bit, each identifier being a parameter relating to a calibration value for triggering opening of the contacts of the circuit breaker (4A; 4B),
the control means (36A; 36B) being adapted to verify, as a function of the verification bit or bits, the validity of the data bit or bits read and sent by each read device.

2. Circuit breaker (4A; 4B) according to claim 1, in which each shift register comprises an assembly of synchronous flip-flops, controlled via the read command.

3. Circuit breaker (4A; 4B) according to one of the preceding claims in which each read device (32A, 34A; 32B, 34B) is connected to a first corresponding memory device (28A, 30A; 28B, 30B), and is adapted to memorise the identifier temporarily only when it is supplied electrically.

4. Circuit breaker (4A; 4B) according to one of the preceding claims, in which the calibration device is adapted in order, in response to the transmission of the command to read each predetermined identifier, to read each predetermined identifier memorised in each first memory device (28A, 30A; 28B, 30B) and to send, to the trigger unit (14A, 14B), each read identifier, with a delay of less than 300 µs, preferably less than 200 µs.

5. Circuit breaker (4A) according to one of the preceding claims, in which each read device (32A, 34A) comprises a parallel-series shift register comprising a plurality of inputs (38A, 40A) in parallel and a single output (41A, 42A), and in which the calibration device (16A) comprises each first memory device (28A, 30A), and each first memory device (28A, 30A) comprises resistances (RA) each connected, on the one hand, either to an electronic earth (M), or to a predetermined potential (VA) different from the earth and, on the other hand, to one of the parallel inputs (38A, 40A) of one of the shift registers.

6. Circuit breaker (4B) according to one of claims 1 to 4, comprising each first memory device (32B, 34B), each first memory device (32B, 34B) comprising at least one resistance (RB) of controllable value, the predetermined identifier corresponding to an electrical value associated with the controllable resistance or resistances (RB), the calibration device (16B) comprising an adaptation device (31B) receiving as input, for each first memory device (28B, 30B), the corresponding electrical value and being adapted to supply, to one of the read devices (32B, 34B), the predetermined identifier.

7. Circuit breaker (4A; 4B) according to one of the preceding claims, in which the calibration device comprises a plurality of read devices (32A, 34A; 32B, 34B), each connected to a first different memory device (28A, 30A; 28B, 30B).

8. Assembly (2) of at least two circuit breakers (4A, 4B), comprising at least:
- a first circuit breaker (4A) according to claim 5, in which each first memory device (28A, 30A) is adapted to memorise the predetermined identifier which comprises a first predetermined number of verification bits greater than or equal to 2, preferably equal to 3, and
- a second circuit breaker (4B) according to claim 6, in which the adaptation device (31B) is able, for each first memory device (28B, 30B) to supply, to one of the read devices (32B, 34B), the predetermined identifier comprising a second number of verification bits less than or equal to the first number of verification bits of each predetermined identifier in the first circuit breaker (4A), the second number of verification bits being preferably equal to 1.

9. Circuit breaker (4A; 4B) according to any of claims 1 to 7, in which the electronic trigger unit (14A; 14B) comprises determination means (37A; 37B) which are able to associate, with each predetermined identifier sent by each read device (32A, 34A; 32B, 34B), an item of calibration data, the item or items of calibration data defining at least one condition to command opening of the contacts of the circuit breaker (4A; 4B) and control means (35A; 35B) being adapted to command opening of the contacts as a function of the item or items of calibration data.

10. Method for calibration of an electronic trigger unit (14A; 14B) of a circuit breaker (4A; 4B) by a calibration device (16A; 16B), the trigger unit (14A; 14B) comprising a trigger device (22A; 22B) for opening contacts of the circuit breaker and control means (35A; 35B) of the trigger device (22A; 22B), the calibration device (16A; 16B) comprising at least one read device (32A, 34A; 32B, 34B), adapted to read the content of at least one first memory device (28A, 30A; 28B, 30B), each first memory device (28A, 30A; 28B, 30B) being adapted to memorise a predetermined identifier, each predetermined identifier being a parameter associated with the circuit breaker (4A; 4B), each first memory device (28A, 30A; 28B, 30B) being included either in the calibration device (16A; 16B) or in the circuit breaker (4A, 4B),
the method comprising the following steps:
- a) generation (102) of a command to read each predetermined identifier,
- b) transmission (102) of the read command to the calibration device,
- d) the command (118) to open the contacts of the circuit breaker as a function of each predetermined identifier,
**characterised in that** the read device (32A, 34A; 32B, 34B) comprises a shift register, and **in that**, preceding the command step (118), the method comprises the following steps:
- b') reading (104), by the read device or devices (32A, 34A; 32B, 34B) of each predetermined identifier and
- b") sending (104), to the trigger unit (14A; 14B), each predetermined identifier read during step b'),
each read device (32A, 34A; 32B, 34B) comprising one or more inputs each able to receive at least one of the predetermined identifiers, each predetermined identifier comprising at least one data bit and at least one verification bit, each identifier being a parameter relating to a calibration value for trigger opening of the contacts of the circuit breaker (4A; 4B),
the method comprising, following the sending step (104) and preceding the command step (118), the following step:
- c) verification (114) as a function of the verification bit or bits of the validity of the data bit or bits read and sent by each read device.

11. Method according to claim 10, in which the read (104) and transmission (102) steps take place in parallel during a predetermined period of time and preceding the generation step (102), the method comprises the following step:
- memorisation (100) in the trigger unit (14A; 14B) of a predetermined item of data (D) corresponding to a configuration of the circuit breaker,
and during the read step, the method comprises the following steps:
- recovery (106) of the predetermined item of data,
- modification (108) of the read command as a function of the predetermined item of data, the read command being modified in order to recommence reading of each predetermined identifier when the predetermined item of data is equal to a predetermined value.
